Europäisches Patentamt

European Patent Office

Office européen des brevets

(19)

(11) Veröffentlichungsnummer: **0 109 478**
**B1**

(12)
# EUROPÄISCHE PATENTSCHRIFT

(45) Veröffentlichungstag der Patentschrift:
05.02.86

(51) Int. Cl.⁴: **B 60 K 31/00,** B 60 Q 9/00

(21) Anmeldenummer: 83104892.1

(22) Anmeldetag: 18.05.83

(54) Einrichtung zum Steuern der Fahrgeschwindigkeit eines Kraftfahrzeuges.

(30) Priorität: 09.10.82 DE 3237535

(43) Veröffentlichungstag der Anmeldung:
30.05.84 Patentblatt 84/22

(45) Bekanntmachung des Hinweises auf die Patenterteilung:
05.02.86 Patentblatt 86/6

(84) Benannte Vertragsstaaten:
DE FR GB IT SE

(56) Entgegenhaltungen:
EP - A - 0 060 326
DE - A - 2 754 813
FR - A - 2 411 098
FR - A - 2 435 369
GB - A - 2 075 222

Querschnitt, nr. 4, März 1981, VDO Adolf Schindling AG, Frankfurt/M.

(73) Patentinhaber: VDO Adolf Schindling AG,
Gräfstrasse 103, D-6000 Frankfurt/Main (DE)

(72) Erfinder: Pfalzgraf, Manfred, Luisenstrasse 19,
D-6000 Frankfurt/Main 1 (DE)
Erfinder: Probst, Kurt, Altkönigstrasse 19,
D-6231 Schwalbach/Ts. (DE)

(74) Vertreter: Könekamp, Herbert, Dipl.-Ing., Sodener Strasse 9, D-6231 Schwalbach (DE)

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

# 0 109 478

## Beschreibung

Die Erfindung bezieht sich auf eine Einrichtung zum Steuern der Fahrgeschwindigkeit eines Kraftfahrzeuges mit einem von einem Gaspedal verstellbaren Sollwertgeber, von dessen Ausgangssignal ein Stellglied eines das Kraftstoff-LuftGemisch beeinflussenden Elements beaufschlagbar ist, mit einem ein Signal entsprechend der Stellung des Stellgliedes erzeugenden Stellgliedgeber, sowie mit einer Alarmschaltung, über die einer Alarmeinrichtung ein Alarmsignal zuleitbar ist, wenn bei nicht betätigtem Sollwertgeber sich das Stellglied in einer Gasstellung befindet. Bei einer derartigen bekannten-Einrichtung (siehe die Zeitschrift QUERSCHNITT, Nr. 4, März 1981, Herausgeber: VDO Adolf Schindling AG) sind in der Alarmschaltung ein vom Gaspedal betätigbarer Pedalkontakt und ein vom Stellglied betätigbarer Stellgliedkontakt parallel zueinander geschaltet. Dabei ist der Pedalkontakt in der Leerlaufstellung des Gaspedals geöffnet und der Stellgliedkontakt in der Leerlaufstellung des Stellglieds geschlossen. Da der Schaltpunkt des Pedalkontakts bei einer niedrigeren Auslenkung des Gas- pedals aus der Leerlaufposition liegt als der Schaltpunkt des Stellgliedkontakts bei entsprechender Auslenkung des Stellglieds aus der Leerlaufposition , ist bei intakter Steuereinrichtung immer ein Stromfluß durch die Alarmschaltung möglich, was bedeutet, daß kein Alarmsignal abgegeben wird. Befindet sich aber das Stellglied nicht in seiner Leerlaufposition, obwohl das Gaspedal nicht betätigt ist, so sind Pedalkontakt und Stellgliedkontakt offen und damit der Stromfluß in der Alarmschaltung unterbrochen. Dies bedeutet, daß ein Alarmsignal der Alarmeinrichtung zugeführt wird.

Bei einer Fehlfunktion des Pedalkontakts oder des Stellgliedkontakts, bei der einer dieser Kontakte permanent geschlossen bleibt, ist eine Fehlfunktion des Stellglieds nicht mehr feststellbar, was zu gefährlichen Fahrsituationen führen kann.

Es ist daher Aufgabe der Erfindung, eine Einrichtung nach dem Oberbegriff zu schaffen, von der ein Fehler in der Alarmschaltung anzeigbar ist. Diese Aufgabe wird erfindungsgemäß dadurch gelöst, daß ein erster Zweig der-Alarmschaltung an seinem Ausgang ein Alarmsignal abgibt, wenn bei betätigtem Gaspedal der Sollwertgeber ein Leerlaufsignal erzeugt, und daß ein zweiter Zweig der Alarmschaltung an seinem Ausgang ein Alarmsignal abgibt, wenn bei betätigtem Stellglied der Stellgliedgeber ein Leerlaufsignal erzeugt. Auf diese Weise erfolgt nicht nur eine Überwachung der korrekten Funktion des Stellgliedes, sondern gleichzeitig auch eine Überwachung der korrekten Funktion der Alarmschaltung selbst. Dabei können alle zu überwachenden Funktionen durch eine einzige Alarmeinrichtung erfaßt werden, wenn der Ausgang des ersten Zweigs und der Ausgang des zweiten Zweigs zusammengeführt und mit einer Alarmeinrichtung verbunden sind.

Um eine gegenseitige Beeinflussung der beiden Zweige der Alarmschaltung zu vermeiden, kann ausgehend von der Leerlaufstellung vom Gaspedal bzw. Stellglied das Alarmsignal des ersten Zweigs vor dem Alarmsignal des zweiten Zweigs der Alarmschaltung abgebbar sein.

Der erste Zweig der Alarmschaltung kann einen Komparator aufweisen, an dessen erstem Eingang ein konstantes elektrisches Signal anliegt, das einer bestimmten Auslenkstellung des Sollwertgebers aus der Leerlaufstellung entspricht, und an dessem zweiten Eingang ein der jeweiligen Stellung des Sollwertgebers entsprechendes elektrisches Signal anliegt, wobei der Ausgang des Komparators einem ersten Eingang eines UND-Gliedes zugeleitet ist, an dessen zweitem Eingang ein Signal bei aus der Leerlaufstellung ausgelenktem Gaspedal anlegbar ist, und daß der zweite Zweig der Alarmschaltung einen zweiten Komparator aufweist, an dessen erstem Eingang ein konstantes elektrisches Signal anliegt, das einer bestimmten Auslenkstellung des Stellgliedgebers aus der Leerlaufstellung entspricht und an dessen zweitem Eingang ein der jeweiligen Stellung des Stellgliedgebers entsprechendes elektrisches Signal anliegt, wobei der Ausgang des zweiten Komparators einem ersten Eingang eines zweiten UND-Gliedes zugeleitet ist, an dessen zweitem Eingang ein Signal bei aus der Leerlaufstellung ausgelenktem Stellglied anlegbar ist und daß sowohl der Ausgang des ersten als auch des zweiten UND-Gliedes mit der Alarmeinrichtung verbunden ist. Ist dabei der erste Eingang des ersten Komparators der positive Eingang und liegt am negativen Eingang des Komparators ein bei vergrößernder Auslenkung des Sollwertgebers aus seiner Leerlaufstellung sich in seiner Größe vergrößerndes Signal an, so liegt ein positives Ausgangssignal so lange am Komparator vor, bis das Signal des Sollwertgebers der Größe des konstanten positiven Signals am positiven Eingang entspricht.

Auf die gleiche Weise arbeitet der zweite Komparator dadurch, daß der erste Eingang des zweiten Komparators der positive Eingang ist und am negativen Eingang des Komparators ein bei vergrößernder Auslenkung des Stellgliedgebers aus seiner Leerlaufstellung sich in seiner Größe verringerndes Signal anliegt.

Mit einfachen Mitteln werden die Eingangssignale der Komparatoren erzeugt, wenn der erste Eingang des ersten und/oder zweiten Komparators mit einem Spannungsteiler verbunden ist und wenn der zweite Eingang des ersten und/oder zweiten Komparators mit einem den Sollwertgeber bzw. den Stellgliedgeber bildenden Potentiometer verbunden ist.

Die Überwachung der Funktion des Gaspedals erfolgt vorzugsweise dadurch, daß dem zweiten Eingang des ersten UND-Gliedes ein vom Gaspedal betätigbarer in Leerlaufstellung des Gaspedals offener Pedalkontakt angeordnet ist, der bei betätigtem Gaspedal geschlossen ist, während auf gleiche Weise die Überwachung der Funktion des Stellgliedes dadurch erfolgt, daß dem zweiten Eingang des zweiten UND-Gliedes ein vom Stellglied betätigbarer in Leerlaufstellung des Stellglieds geschlossener Stellgliedkontakt angeordnet ist, der bei betätigtem Stellglied geöffnet ist und wenn der erste Eingang des UNDGliedes invertiert ist.

Liegt der Schaltpunkt des Pedalkontakts bei größerer Auslenkung des Gaspedals aus der Leerlaufstellung als der Schaltpunkt des ersten Komparators, so erhält der vom Komparator kommende Eingang des UND-Gliedes so lange ein positives Signal zugeleitet, bis die Größe des Sollwertsignals die Konstantsignalgröße am positiven

2

Komparatoreingang erreicht hat. In dieser Zeit liegt wegen des geöffneten Pedalkontakts am zweiten Eingang des UND-Gliedes noch kein positives Signal vor. Das positive Signal des Komparators wird aber gelöscht. Erst bei einer weiteren Auslenkung des Gaspedals schließt der Pedalschalter und der zweite Eingang des UND-Gliedes erhält ein positives Signal. Da aber an dem ersten Eingang kein positives Signal mehr anliegt, kann das UND-Glied auch kein Alarmsignal an die Alarmeinrichtung geben. Ist der Sollwertgeber defekt und bleibt daher das positive Ausgangssignal des ersten Komparators bestehen, so liegen nach schließen des Pedalkontakts an beiden Eingängen des ersten UND-Gliedes positive Signale an, so daß an dessen Ausgang ein Alarmsignal abgegeben wird. Ein solches Alarmsignal wird desgleichen abgegeben, wenn der Pedalkontakt defekt ist und nicht an seinem Schaltpunkt schließt, da dann zwei negative Signale am UND-Glied anliegen.

Nach dem gleichen Prinzip arbeitet der zweite Komparator bei dem der Schaltpunkt bei größerer Auslenkung des Stellgliedes liegt als der Schaltpunkt des Stellgliedkontakts. Dies bedeutet, daß der Komparator so lange ein positives Signal dem zweiten UND-Glied zuleitet, bis die Größe des Stellgliedgebersignals die Größe des Konstantsignals am positiven Eingang des Komparators erreicht. Damit schaltet der Komparator um und leitet dem UND-Glied ein negatives Signal zu. Da dieses Signal am UND-Glied invertiert wird, ändert sich das vorher negativ beaufschlagende Signal in ein positives Signal. Mit weiterem Verstellen des Stellglieds öffnet der zuvor geschlossene Stellgliedkontakt und der zweite Eingang des UNDGliedes erhält statt eines positiven ein negatives Signal. Bei einem Defekt des Stellgliedgebers oder des Stellgliedkontakts kommt es zu gleichen an den Eingängen des UND-Gliedes anliegenden Signalen, so daß dieses ein Alarmsignal abgibt.

Zur Vermeidung gegenseitiger Beeinflussungen der Zweige des Alarmschaltkreises, liegt der Schaltpunkt des Stellgliedkontakts bei größerer Auslenkung des Stellgliedes als der Schaltpunkt des Pedalkontakts bei entsprechender Auslenkung des Gaspedals.

Die Alarmeinrichtung kann eine Lampe sein.

Um bei kurzzeitigen Störungen und bei den Umschaltvorgängen einen falschen Alarm zu vermeiden, kann der Alarmeinrichtung ein Zeitglied vorgeschaltet sein, das vorzugsweise ein RC-Glied ist.

Eine permanente und nicht nur kurzzeitige Beaufschlagung der Alarmeinrichtung wird erreicht, wenn der Alarmeinrichtung ein Speicherglied, z.B. ein Flipp-Flopp vorgeschaltet ist.

Ist vom Ausgangssignal der Alarmschaltung ein elektronischer Regler der Steuereinrichtung die Steuereinrichtung lastreduzierend verstellend beaufschlagbar, so kann automatisch die Stellung des Stellgliedes so weit zurückgestellt werden, daß zwar noch die Möglichkeit besteht zu einer Werkstatt zu fahren, ein gefährliches Verstellen in Vollgasstellung aber unmöglich ist.

Ein Ausführungsbeispiel der Erfindung ist in der Zeichnung dargestellt und wird im folgenden näher beschrieben. Es zeigen

Figur 1 ein Ausführungsbeispiel einer erfindungsgemäßen Einrichtung

Figur 2 ein Schaltpunktdiagramm des Komparatorsignalsdes ersten Zweigs abhängig vom Auslenkwinkel des Gaspedals nach Figur 1

Figur 3 ein Schaltpunktdiagramm des Pedalkontaktsignals abhängig vom Auslenkwinkel des Gaspedals nach Figur 1

Figur 4 ein Schaltpunktdiagramm des Komparatorsignals des zweiten Zweiges abhängig vom Auslenkwinkel des Gaspedals nach Figur 1

Figur 5 ein Schaltpunktdiagramm des Stellgliedkontakts abhängig vom Auslenkwinkel des Gaspedals nach Figur 1.

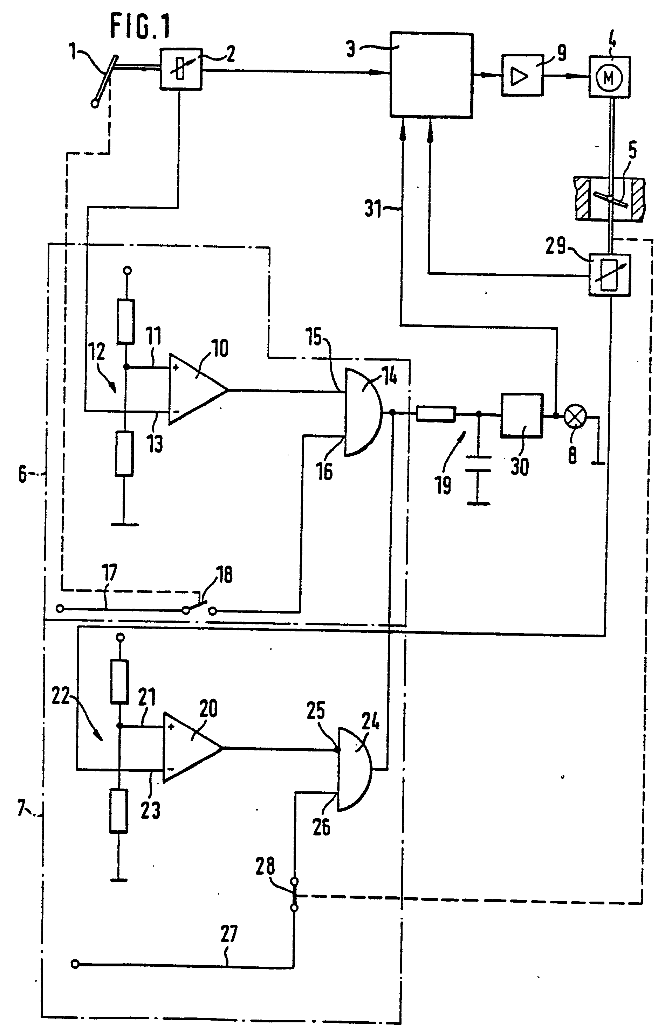

Die in Figur 1 dargestellte Einrichtung weist einen von einem Gaspedal 1 verstellbaren als Potentiometer ausgebildeten Sollwertgeber 2 auf. Sein Ausgangssignal wird einem elektrischen Regler 3 zugeleitet, der über einen Verstärker 9 einen Stellgliedantrieb 4 ansteuert. Von diesem ist ein durch eine Drosselklappe gebildetes Stellglied 5 zur Beeinflussung des Kraftstoff-Luft-Gemisches sowie ein von einem Potentiometer gebildeter Stellgliedgeber 29 verstellbar.

Durch eine aus einem ersten Zweig 6 und einem zweiten Zweig 7 bestehende Alarmschaltung von der eine durch eine Lampe 8 gebildete Alarmeinrichtung ansteuerbar ist, ist die einwandfreie Funktion der Einrichtung zum Steuern der Fahrgeschwindigkeit überwachbar.

Der erste Zweig 6 der Alarmschaltung weist einen Komparator 10 auf, mit dessen erstem positiven Eingang 11 ein Spannungsteiler 12 verbunden ist. Von diesem Spannungsteiler 12 wird der Eingang 11 mit einem konstanten elektrischen Signal beaufschlagt, das einer bestimmten Auslenkstellung des Sollwertgebers 2 aus der Leerlaufstellung von z.B. 8° entspricht.

Der negative zweite Eingang 13 des Komparators 10 wird vom Ausgangssignal des Sollwertgebers 2 beaufschlagt, u.z. derart, daß sich die Größe des Signals bei sich vergrößernder Auslenkung des Sollwertgebers 2 erhöht. Erreicht dabei dieses Signal die Größe des am Eingang 11 anliegenden konstanten Signals, so gibt der Komparator 10 der bis dahin ein positives Signal abgegeben hat, nun ein negatives Ausgangssignal zu einem ersten Eingang 15 eines UND-Gliedes 14 ab.

In der Ansteuerleitung 17 des zweiten Eingangs 16 des UND-Gliedes 14 ist ein Pedalkontakt 18 angeordnet, der vom Gaspedal 1 betätigbar ist und in Leerlaufstellung des Gaspedals offen bei etwas größerer Auslenkung von etwa 10° des Gaspedals 1 aus der Leerlaufstellung als der durch den Spannungsteiler 12 festgelegten Auslenkstellung aber geschlossen ist.

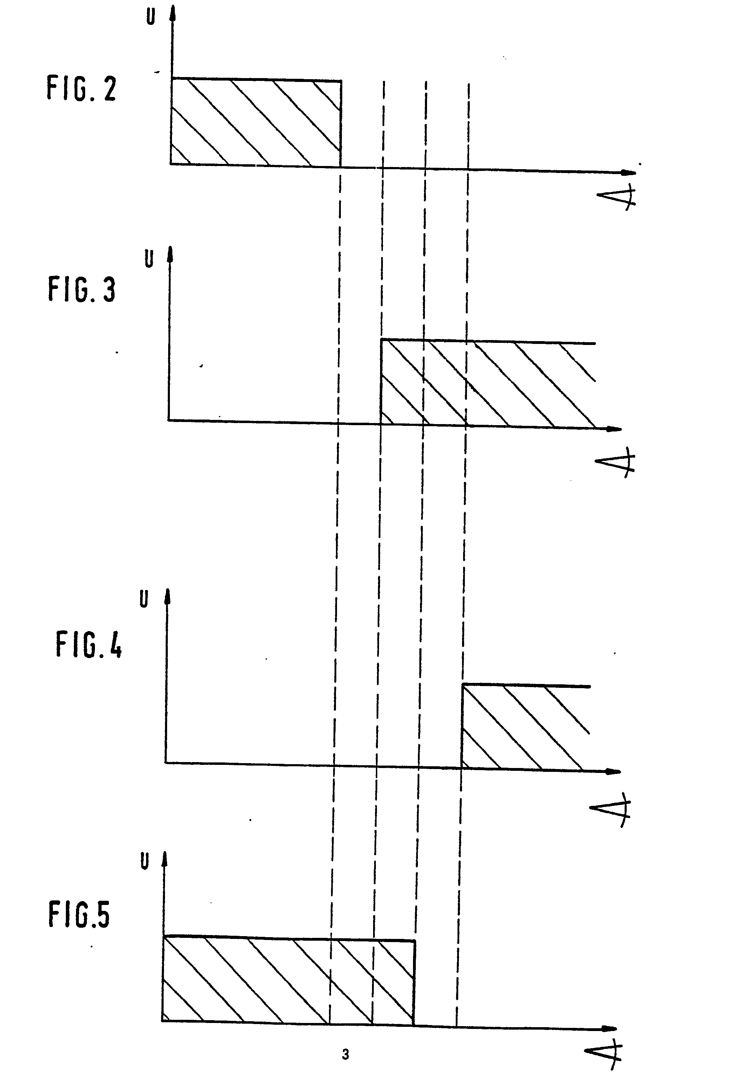

Aus Figur 2, in der das Eingangssignal am ersten Eingang 15 des UND-Gliedes 14 und aus Figur 3, in der Eingangssignal am zweiten Eingang des UND-Gliedes 14 jeweils in Abhöngigkeit vom Auslenkwinkel des Gaspedals 1 aufgetragen ist, ist zu erkennen, daß bei intaktem ersten Zweig 6 am Ausgang des UND-Gliedes 14

3

kein Alarmsignal abgegeben werden kann.

Sollte aber der Sollwertgeber 2 oder Pedalkontakt 18 defekt sein, so kommt es an den Eingängen 15 und 16 des UND-Gliedes 14 zu gleichartigen Signalen und damit an dessen Ausgang zu einem Alarmsignal. Um zu vermeiden, daß bei intaktem ersten Zweig 6 ein während der Spanne zwischen dem Umschalten der beiden Eingangssignale des UND-Gliedes 14 entstehendes Ausgangssignal als Alarmsignal erkannt wird und die Lampe 8 zum Leuchten bringt, ist zwischen dem Ausgang des UND-Gliedes 14 und der Lampe 8 ein als Zeitglied dienendes RC-Glied 19 geschaltet.

Der zweite Zweig 7 der Alarmschaltung weist einen Komparator 20 auf, mit dessen erstem positiven Eingang 21 ein Spannungsteiler 22 verbunden ist. Von dem Spannungsteiler wird dieser Eingang 21 mit einem konstanten elektrischen Signal beaufschlagt, das einer bestimmten Auslenkstellung von etwa 14° des Stellgliedgebers 29 aus der Leerlaufstellung entspricht.

Der negative zweite Eingang 23 des Komparators 20 wird vom Ausgangssignal des Stellgliedgebers 29 beaufschlagt, u.z. derart, daß die Größe des Signals sich bei vergrößernder Auslenkung des Stellgliedgebers 29 sich vergrößert. Erreicht dabei dieses Signal die Größe des am Eingang 21 anliegenden konstanten Signals, so gibt der Komparator 20 der bis dahin ein positives Signal abgegeben hat, nun ein negatives Ausgangssignal zu einem ersten Eingang 25 eines UND-Gliedes 24 ab. Da dieser erste Eingang 25 invertiert ist, ist das vom UND-Glied 24 erfaßte vom Komparator negativ abgegebene Signal positiv.

In der Ansteuerleitung 27 des zweiten Eingangs 26 des UND-Gliedes 24 ist ein Stellgliedkontakt 28 angeordnet, der vom Stellglied 5 betätigbar ist und in Leerlaufstellung des Stellgliedes geschlossen bei etwas kleinerer Auslenkung von etwa 12° des Stellgliedes 5 aus der Leerlaufstellung als der durch den Spannungsteiler 22 festgelegten Auslenkstellung aber offen ist.

In Figur 4 ist das vom UND-Glied 24 am invertierten Eingang 25 erfaßte Signal und in Figur 5 das am Eingang 26 erfaßte Signal aufgetragen. Daraus ist zu erkennen, daß bei intaktem zweiten Zweig 7 am Ausgang des UND-Gliedes 24 kein Alarmsignal abgegeben werden kann.

Bei Defekt von Stellgliedgeber 29 oder Stellgliedkontakt 28 erfaßt das UND-Glied 24 zwei gleichartige Signale und gibt somit ein Ausgangssignal ab. Auch hier wird ein falsches Alarmsignal beim Umschalten durch das RC-Glied 19 unterdrückt.

In den Figuren 2-5 ist weiterhin zu erkennen, daß der Schaltpunkt des Stellgliedkontaktes 28 bei größerer Auslenkung des Stellgliedes 5 liegt als der Schaltpunkt des Pedalkontakts 18 bei entsprechender Auslenkung des Gaspedals 1. Auf diese Weise wird eine gegenseitige Beeinflussung der beiden Zweige 6 und 7 vermieden. Ein der Lampe 8 vorgeschaltetes als Flipp-Flopp ausgebildetes Speicherglied 30 sorgt dafür, daß bei Zuleitung eines Alarmsignals dieses permanent die Lampe 8 ansteuert und somit nicht nur zum kurzen übersehbaren Aufleuchten bringt.

Über eine Leitung 31 wird ein erzeugtes Alarmsignal auch dem Regler 3 zugeleitet, der von diesem Alarmsignal derart angesteuert wird, daß er den Stellantrieb 4 vorrangig lastreduzierend ansteuert. Damit wird eine Vollgasstellung des Stellglieds 5 verhindert, ein Fahren mit geringer Geschwindigkeit zum Erreichen einer Werkstatt aber ermöglicht.

**Patentansprüche**

1. Einrichtung zum Steuern der Fahrgeschwindigkeit eines Kraftfahrzeuges mit einem von einem Gaspedal (1) verstellbaren Sollwertgeber (2), von dessen Ausgangssignal ein Stellglied (5) eines das Kraftstoff-Luft-Gemisch beeinflussenden Elements beaufschlagbar ist, mit einem ein Signal entsprechend der Stellung des Stellgliedes erzeugenden Stellgliedgeber (29), sowie mit einer Alarmschaltung, über die einer Alarmeinrichtung (8) ein Alarmsignal zuleitbar ist, wenn bei nicht betätigtem Sollwertgeber sich das Stellglied in einer Gasstellung befindet, dadurch gekennzeichnet, daß ein erster Zweig (6) der Alarmschaltung an seinem Ausgang ein Alarmsignal abgibt, wenn bei betätigtem Gaspedal (1) der Sollwertgeber (2) ein Leerlaufsignal erzeugt und daß ein zweiter Zweig (7) der Alarmschaltung an seinem Ausgang ein Alarmsignal abgibt, wenn bei betätigtem Stellglied (5) der Stellgliedgeber (29) ein Leerlaufsignal erzeugt.

2. Einrichtung nach Anspruch 1, dadurch gekennzeichnet, daß der Ausgang des ersten Zweigs (6) und der Ausgang des zweiten Zweigs (7) zusammengeführt und mit einer Alarmeinrichtung verbunden sind.

3. Einrichtung nach einem der vorhergehenden Ansprüche, dadurch gekennzeichnet, daß ausgehend von der Leerlaufstellung von Gaspedal (1) bzw. Stellglied (5) das Alarmsignal des ersten Zweigs (6) vor dem Alarmsignal des zweiten Zweigs (7) der Alarmschaltung abgebbar ist.

4. Einrichtung nach einem der vorhergehenden Ansprüche, dadurch gekennzeichnet, daß der erste Zweig (6) derAlarmschaltung einen Komparator (10) aufweist, an dessen ersten Eingang (11) ein konstantes elektrisches Signal anliegt, das einer bestimmten Auslenkstellung des Sollwertgebers (2) aus der Leerlaufstellung entspricht, und an dessen zweitern Eingang (13) ein der jeweiligen Stellung des Sollwertgebers (2) entsprechendes elektrisches Signal anliegt, wobei der Ausgang des Komparators (10) einem ersten Eingang (15) des UND-Gliedes (14) zugeleitet ist, an dessen zweitem Eingang (16) ein Signal bei aus der Leerlaufstellung ausgelenktem Gaspedal (1) anlegbar ist, und daß der zweite Zweig (7) der Alarmschaltung einen zweiten Komparator (20) aufweist, an dessen erstem Eingang (21) ein konstantes elektrisches Signal anliegt, das einer bestimmten Auslenkstellung des Stellgliedgebers (29) aus der Leerlaufstellung entspricht, und an dessen zweitem Eingang

4

(23) ein der jeweiligen Stellung des Stellgliedgebers (29) entsprechendes elektrisches Signal anliegt, wobei der Ausgang des zweiten Komparators (20) einem ersten Eingang (25) eines zweiten UND-Gliedes (24) zugeleitet ist, an dessen zweitem Eingang (26) ein Signal bei aus der Leerlaufstellung ausgelenktem Stellglied (5) anlegbar ist, und daß sowohl der Ausgang des ersten als auch des zweiten UND-Gliedes (14, 24) mit der Alarmeinrichtung verbunden ist.

5 Einrichtung nach Anspruch 4, dadurch gekennzeichnet, daß der erste Eingang (11) des ersten Komparators (10) der positive Eingang ist und am negativen Eingang (13) des Komparators (10) ein bei vergrößernder Auslenkung des Sollwertgebers (2) aus seiner Leerlaufstellung sich in seiner Größe vergrößerndes Signal anliegt.

6. Einrichtung nach Anspruch 4, dadurch gekennzeichnet, daß der erste Eingang (21) des zweiten Komparators (20) der positive Eingang ist und am negativen Eingang (23) des Komparators (20) ein bei vergrößernder Auslenkung des Stellgliedgebers (29) aus seiner Leerlaufstellung sich in seiner Größe vergrößerndes Signal anliegt.

7. Einrichtung nach einem der vorhergehenden Ansprüche, dadurch gekennzeichnet, daß der erste Eingang (11 21) des ersten und/oder zweiten Komparators (10,20) mit einem Spannungsteiler (12, 22) verbunden ist und daß der zweite Eingang (13, 23) des ersten und/oder zweiten Komparators (10, 20) mit einem den Sollwertgeber (2) bzw. den Stellgliedgeber (29) bildenden Potentiometer verbunden ist.

8. Einrichtung nach einem der vorhergehenden Ansprüche, dadurch gekennzeichnet, daß dem zweiten Eingang (16) des ersten UND-Gliedes (14) ein vom Gaspedal (1) betätigbarer, in Leerlaufstellung des Gaspedals (1) offener Pedalkontakt (18) angeordnet ist, der bei betätigtem Gaspedal (1) geschlossen ist.

9. Einrichtung nach einem der vorhergehenden Ansprüche, dadurch gekennzeichnet, daß dem zweiten Eingang (26) des zweiten UND-Glieds (24) ein vom stellglied (5) betätigbarer, in Leerlaufstellung des Stellglieds (5) geschlossener Stellgliedkontakt (28) angeordnet ist, der bei betätigtem Stellglied (5) geöffnet ist und daß der erste Eingang (25) des UND-Gliedes (24) invertiert ist.

10 Einrichtung nach einem der vorhergehenden Ansprüche, dadurch gekennzeichnet, daß der Schaltpunkt des Pedalkontakts (18) bei größerer Auslenkung des Gaspedals (1) aus der Leerlaufstellung liegt als der Schaltpunkt des ersten Komparators (10).

11 Einrichtung nach einem der vorhergehenden Ansprüche, dadurch gekennzeichnet, daß der Schaltpunkt des zweiten Komparators (20) bei größerer Auslenkung des Stellglieds (5) aus der Leerlaufstellung liegt als der Schaltpunkt des Stellgliedkontakts (28).

12 Einrichtung nach einem der vorhergehenden Ansprüche, dadurch gekennzeichnet, daß der Schaltpunkt des Stellgliedkontakts (28) bei größerer Auslenkung des Stellglieds (5) aus der Leerlaufstellung liegt als der Schaltpunkt des Pedalkontakts (18) bei entsprechender Auslenkung des Gaspedals (1).

13. Einrichtung nach einem der vorhergehenden Ansprüche, dadurch gekennzeichnet, daß die Alarmeinrichtung eine Lampe (8) ist.

14. Einrichtung nach einem der vorhergehenden Ansprüche, dadurch gekennzeichnet, daß der Alarmeinrichtung ein Zeitglied vorgeschaltet ist.

15. Einrichtung nach Anspruch 14, dadurch gekennzeichnet, daß das Zeitglied ein RC-Glied (19) ist.

16. Einrichtung nach einem der vorhergehenden Ansprüche, dadurch gekennzeichnet, daß der Alarmeinrichtung ein speicherglied (30) vorgeschaltet ist.

17. Einrichtung nach Anspruch 16, dadurch gekennzeichnet, daß das speicherglied (30) ein Flipp-Flopp ist.

18. Einrichtung nach einem der vorhergehenden Ansprüche, dadurch gekennzeichnet, daß vom Ausgangssignal der Alarmschaltung ein elektronischer Regler (3) der steuereinrichtung die steuereinrichtung lastreduzierend verstellend beaufschlagbar ist.

## Claims

1. Device for controlling the speed of travel of a motor vehicle, with a desired value signal emitter (2) adjustable by an accelerator pedal (1), the output signal of said emitter being adapted to act on a regulating element (5) of a unit influencing the fuel-air mixture, with a regulating element signal emitter (29) producing a signal corresponding to the position of the regulating element, and also with an alarm circuit by means of which an alarm signal can be fed to an alarm device (8) when the regulating element is in an open position when the desired value signal emitter is not actuated, characterised in that a first branch (6) of the alarm produces an idling signal when the regulating element (5) is actuated.

2. Device according to claim 1, characterised in that the output of the first branch (6) and the output of the second branch (7) are brought together and are connected to an alarm device.

3. Device according to one of the preceding claims, characterised in that starting from the idling position of accelerator pedal (1) and regulating element (5) respectively the alarm signal of the first branch (6) is emittable before the alarm signal of the second branch (7) of the alarm circuit.

4. Device according to one of the preceding claims, characterised in that the first branch (6) of the alarm circuit includes a comparator (10) to the first input (11) of which a constant electrical signal is applied, which corresponds to a specific deflection position of the desired value signal emitter (2) from the idling position, and to the second input (l3) of which there is applied an electrical signal corresponding to the then obtaining position of the desired value signal emitter (2), the output of the comparator (10) being passed to a first input (15) of the AND-element (14) to whose second input (16) a signal is adapted to be applied when the accelerator pedal (1) is deflected from the idling position, and that the second branch (7) of the alarm circuit includes a second comparator (20) to whose first input (21) a constant electrical signal is applied which corresponds to a specific deflection position of the regulating element signal emitter (29) from the idling position, and at whose second input (23) an electrical signal is present which corresponds to the then obtaining position of the regulating element signal emitter (29), the output of the second comparator (20) being passed to a first input (25) of a second AND-element(24) to whose second input (26) a signal is adapted to be applied when the regulating element (5) is deflected from the idling position, and that both the output of the first ANDelement (14) and the output of the second AND-element (24) are connected to the alarm device.

5. Device according to claim 4, characterised in that the first input (11) of the first comparator (10) is the positive input, and at the negative input (13) of the comparator (10) there is present a signal which increases in its magnitude with increasing deflection of the desired value signal emitter (2) from its idling position.

6. Device according to claim 4, characterised in that the first input (21) of the second comparator (20) is the positive input, and a signal which increases in magnitude with increasing deflection of the regulating element signal emitter (29) from its idling position is present at the negative input (23) of the comparator (20).

7. Device according to one of the preceding claims, characterised in that the first input (11, 21) of the first and/or second comparator (10, 20) is connected to a voltage divider (12, 22), and that the second input (13, 23) of the first and/or second comparator (10, 20) is connected to a potentiometer forming the desired value signal emitter (2) and the regulating element signal emitter (29) respectively.

8. Device according to one of the preceding claims, characterised in that there is associated with the second input (16) of the first AND-element (14) a pedal contact (18) which is operatable by the accelerator pedal 31) and is open in the idling position of the accelerator pedal (1) and which is closed when the accelerator pedal (1) is actuated.

9. Device according to one of the preceding claims, characterised in that there is associated with the second input (26) of the second AND-element (24) a regulating element contact (28) which is actuatable by the regulating element (5), is closed in the idling position of the regulating element (5) and is opened when the regulating element (5) is actuated, and that the first input (25) of the AND-element (24) is inverted.

10. Device according to one of the preceding claims, characterised in that the switching point of the pedal contact (18) is at a greater deflection of the accelerator pedal (1) from the idling position than the switching point of the first comparator (10).

11. Device according to one of the preceding claims, characterised in that the switching point of the second comparator (20) is at a greater deflection of the regulating element (5) from the idling position than the switching point of the regulating element contact (28).

12. Device according to one of the preceding claims, characterised in that the switching point of the regulating element contact (28) is at a greater deflection of the regulating element (5) from the idling position than the switching point of the pedal contact (l8)witha corresponding deflection of the accelerator pedal (1).

13. Device according to one of the preceding claims, characterised in that the alarm device is a lamp (8).

14. Device according to one of the preceding claims, chazacterised in that the alarm device ispreceded by a timing element:

15. Device according to claim 14, characterised in that the timing element is an RC element (19).

16. Device according to one of the preceding claims, characterised in that the alarm device is preceded by a storage element (30).

17. Device according to claim 16, characterised in that the storage element (30) is a flip-flop.

18. Device according to one of the preceding claims, characterised in that the output signal of the alarm circuit is adapted to act on an electronic controller (3) of the control device in the sense of adjusting the control device to reduce load.


**Revendications**

1. Dispositif pour commander la vitesse de éplacement d'un véhicule automobile/ comprenant un ndicateur (2) de valeur(s)de consigne pouvant être régle par une pe'dale d'accélération (1) et dont le signal le sortie peut activer un organe de manoeuvre (5) d'un lément influençant le mélange air/carburant un indicaeur (29) associé à l'organe de manoeuvre et engendrant un signal correspondant à la position de cet organe de manoeuvre ; ainsi qu,un circuit d'alarme/ par l'intermédiaire duquel un signal d'alarme (8) lorsque l'organe de manoeuvre occupe une position d'accélération alors que l'indicateur de valeur(s) de consigne n'est pas actionné/ dispositif caractérisé par le fait qu'une premiere branche (6) du circuit d'alarme délivre/ à sa sortie/ un signal d'alarme lorsque l'indicateur de valeur(s) de consigne engendre un signal de ralenti alors que la pédale d'accélération (1) est actionnée ; et par le fait qu'une seconde branche (7) du circuit d'alarme délivre/ à sa sortie, un signal d'alarme lorsque l'indicateur (29) associé à l'organe de manoeuvre engendre un signal de ralenti alors que l'organe de manoeuvre (5) est actionne.

2. Dispositif selon la revendication 1/ caracterisé par le fait que la sortie de la premiere branche (6) et la sortie de la seconde branche (7) sont conjuguées et raccordées à un dispositif d'alarme.

3. Dispositif selon l'une quelconque des revendications précédentes, caractérisé par le fait que/ sur la base de

6

**0 109 478**

la position de ralenti respective de la pédale d'accélération (1) ou de l'organe de manoeuvre (5)/ le signal d'alarme de la première branche (6) peut être délivré avant le signal d'alarme de la seconde branche (7) du circuit d'alarme.

4. Dispositif selon l'une quelconque des revendications précédentes, caractérisé par le fait que la première branche (6) du circuit d'alarme présente un comparateur (10) à la- première entrée (11) duquel est appliqué un signal électrique constant qui correspond à une position de déviation déterminée de l'indicateur (2) de veleur(s) de consigne à l'écart de la position de ralenti/ et à la seconde entrée (13) duquel est appliqué un signal électrique correspondant à la position considérée de l'indicateur (2) de valeur(s)de consigne, la sortie dudit comparateur (10) étant dirigée vers une première entrée (15) de l'organe ET (14) à la seconde entrée (16) duquel un signal peut être appliqué lorsque la pédale d'accélération (1) est déviée à l'écart de la position de ralentipar le fait que la seconde branche (7) du circuit d'alarme (21) duquel est appliqué un signal électrique constant qui correspond à une position de déviation determine'e/ a l'écart de la position de ralenti/ de l'indicateur (29) associe a' l'organe de manoeuvre/ et à la seconde entrée (23) duquel est appliqué un.signal électrique correspondant à la position considérée dudit indicateur (29) associe a l'organe de manoeuvre/ la sortie du second comparateur (20) étant dirigée vers une première entrée (25) d'un second organe ET (24) à la seconde entrée (26) duquel un signal peut être appliqué lorsque l'organe de manoeuvre (5) est dévié à l'écart de la position de ralenti ; et par le fait que les sorties des premier et second organes ET (14, 24) sont raccordées l'une et l'autre au dispositif d'alarme.

5. Dispositif selon la revendication 4, caractérisé par le fait que la première entrée (11) du premier comparateur (10) constitue l'entrée positive, l'entre'e négative (13) de ce comparateur (10) recevant un signal dont la valeur croit lorsque l'indicateur (2) de valeur(s) de consigne accuse une déviati?n croissante à l'écart de sa position de ralenti.

6. Dispositif selon la revendication 4, caracterisé par le fait que la première entrée (21) du second comparateur (20) constitue l'entrée positive/ l'entrée négative (23) de ce comparateur (20) recevant un signal dont la valeur augmente lorsque l'indicateur (29) associé l'organe de manoeuvre accuse une deviation croissante l'écart de sa position de ralenti.

7. Dispositif selon l'une quelconque des revendications précédentes/ caractérisé par le fait que la remiere entrée (11/ 21) du premier et/ou du second omparateurs (10/ 20) est raccordée à un diviseur de tension (12/ 22) ; et par le fait que la seconde entrée (13, 23) du premier et/ou du second comparateurs (10/ 20) est raccordée à un potentiomêtre formant respectivement l'indicateur (2) de valeur(s) de consigne ou l'indicateur (29) associé à l'organe de manoeuvre.

8. Dispositif selon l'une quelconque des revendications précédentes/ caractérisé par le fait qu'un contact (19) de pédale/ associé à la seconde entrée (16) du premier organe ET (14)/ pouvant être actionné par la pédale d'accélération (1) et qui est ouvert dans la position de ralenti de cette pédale d'accélération (1)/ est ferme lorsque ladite pédale d'accélération (1) est actionnee.

9. Dispositif selon l'une quelconque des revendications précédentes, caractérisé par le fait qu'un contact (29) d'organe de manoeuvre, associé à la seconde entree (26) du second organe ET (24), pouvant être actionne par l'organe de manoeuvre (5) et qui est fermé dans la position de ralenti de cet organe de manoeuvre (5)/ est ouvert lorsque ledit organe de manoeuvre (5) est actionné ; et par le fait que la premiere entrée (25) de l'organe ET (24) est inversée.

10. Dispositif selon l'une quelconque des revendications précédentes/ caractérisé par le fait que le point d'enclenchement du contact (18) de pédale correspond â une déviation de la pédale d'accélération (1) à l'écart de la position de ralenti, qui est plus grande que celle impliquant le point d'enclenchement du premier comparateur (10).

11. Dispositif selon l'une quelconque des revendications précédentes/ caractérisé par le fait que le point "enclenchement du second comparateur (20) correspond à une éviation de l'organe de manoeuvre (5)/ à l'ecart de la position de ralenti/ qui est plus grande que la déviation impliquant le point d'enclenchement du contact 28) associé audit organe de manoeuvre.

12. Dispositif selon l'une quelconque des revendications précédentes/ caractérisé par le fait que le point d'enclenchement du contact (29) associé à l'organe de manoeuvre correspond à une déviation de l'organe de manoeuvre (5), à l'écart de la position de ralenti-/ qui est plus grande que la déviation correspondante de la pédale d'accélération (1) impliquant le point d'enclenchement du contact (18) de pédale.

13. Dispositif selon l'une quelconque des revendications precedentes/ caractérisé par le fait que le dispositif d'alarme consiste en une lampe (8).

14. Dispositif selon l'une quelconque des revendications précédentes/ caractérisé par le fait qu'un organe de temporisation est branché en amont du dispositif d'alarme.

15. Dispositif selon la revendication 14, caracterisé par le fait que l'organe de temporisation consiste en un organe (19) du type RC.

16. Dispositif selon l'une quelconque des revendications précédentes, caractérisé par le fait qu'un organe de mémorisation (30) est branché en amont du dispositif d'alarme.

17. Dispositif selon la revendication 16/ caractérisé par le fait que l'organe de mémorisation (30) consiste en une bascule.

18. Dispositif selon l'une quelconque des revendications précédentes/ caractérisé par le fait que le signal de sortie du circuit d'alarme peut provoquer l'activation d'un régulateur électronique (3) du dispositif de commande, qui assure le réglage de ce dispositif de commande en réduisant sa charge.

7

FIG.1

0 109 478

0 109 478

FIG. 2

FIG. 3

FIG.4

FIG.5

3